**Europäisches Patentamt**

(19) **European Patent Office**

**Office européen des brevets**

(11) Veröffentlichungsnummer: **0 100 828**
**B1**

(12) **EUROPÄISCHE PATENTSCHRIFT**

(45) Veröffentlichungstag der Patentschrift:
**27.11.85**

(51) Int. Cl.⁴: **G 01 B 5/24**, G 01 B 11/26

(21) Anmeldenummer: **83105202.2**

(22) Anmeldetag: **26.05.83**

(54) **Winkelmesseinrichtung.**

(30) Priorität: **30.07.82 DE 3228507**

(43) Veröffentlichungstag der Anmeldung:
**22.02.84 Patentblatt 84/8**

(45) Bekanntmachung des Hinweises auf die Patenterteilung:
**27.11.85 Patentblatt 85/48**

(84) Benannte Vertragsstaaten:
**AT CH DE FR GB IT LI NL SE**

(56) Entgegenhaltungen:
**DE - A - 3 214 087**

(73) Patentinhaber: **Dr. Johannes Heidenhain GmbH,
Nansenstrasse 17, D-8225 Traunreut (DE)**

(72) Erfinder: **Ernst, Alfons, Dipl.-Ing., Traunring 62,
D-8225 Traunreut (DE)**
Erfinder: **Brunner, Arthur, Ing. (grad.), Weissaustrasse 1,
D-8223 Trostberg (DE)**

ACTORUM AG

# Beschreibung

Die Erfindung betrifft eine Winkelmesseinrichtung gemäss dem Oberbegriff des Anspruchs 1.

Eine derartige Winkelmesseinrichtung ohne eigene Lagerung der Teilscheibe, die zum Anbau an eine externe Lagerung, zum Beispiel an die Antriebswelle eines Motors bestimmt ist, besitzt gegenüber Winkelmesseinrichtungen mit eigener Welle und Lagerung für die Teilscheibe im Stator den Vorteil, dass sich durch Wegfall der Lagerung, der Welle und der Wellenkupplung zum Anschluss der Welle an die externe Antriebswelle und durch die direkte Befestigung des Stators (Gehäuses) ein preisgünstiger und einfacher Aufbau ergibt. Ferner entfallen die Verdrillung der Kupplung infolge der Winkelbeschleunigung der Antriebswelle und das Reibungsmoment der Lagerung; schliesslich wird die Gesamtlänge der Winkelmesseinrichtung wesentlich reduziert. Als nachteilig erweist sich jedoch die Notwendigkeit, dass der Anwender bei der Montage einer solchen Winkelmesseinrichtung Justierarbeiten durchführen muss, die, je nach der Feinheit der verwendeten Winkelteilung, aufwendige Vorrichtungen, qualifiziertes Personal und hohen Zeitaufwand bedingen.

Bekannt ist eine Winkelmesseinrichtung mit einem zweiteiligen Stator, so dass bei der Montage zuerst das Statorunterteil, das z. B. die Beleuchtungseinrichtung und die Abtastplatte enthält, mittels einer Vorrichtung nach der externen Antriebswelle zentriert, sodann die Anschlussnabe mit der Teilscheibe auf die Antriebswelle aufgeschoben und geklemmt, dann das Statoroberteil mit den Photoelementen und der Impulsformerstufe und schliesslich die Gehäusekappe mit den elektrischen Leitungen montiert werden. Da die Photoelemente zum Statorunterteil exakt angeordnet sein müssen, ist ein Justiervorgang bei der Montage erforderlich oder es müssen erhöhte Aufwendungen für Passstifte oder ähnliche Einrichtungen in Kauf genommen werden. Die elektrischen Leitungen zwischen Statorunterteil und Statoroberteil müssen flexibel oder steckbar angeordnet sein, was in beiden Fällen zu Messfehlern führen kann.

Ferner ist eine Winkelmesseinrichtung mit einer sichelförmigen Ausbildung des Stators bekannt, bei der zuerst die Anschlussnabe mit der Teilscheibe auf einer externen Antriebswelle befestigt, dann der komplette Stator auf die Anbaufläche aufgesetzt und quer zur Antriebswelle verschoben werden, bis die Abtasteinheit die Teilscheibe umfasst; anschliessend muss ein Justiervorgang zur exakten Ausrichtung der Abtasteinheit in radialer und tangentialer Richtung bezüglich der Antriebswelle bzw. der Anschlussnabe erfolgen.

Der Erfindung liegt die Aufgabe zugrunde, bei einer derartigen Winkelmesseinrichtung eine exakte Ausrichtung des Stators beim Befestigen an der Anbaufläche einer Antriebseinheit ohne Justierung zu ermöglichen.

Diese Aufgabe wird bei einer Einrichtung der eingangs gennanten Art erfindungsgemäss durch die kennzeichnenden Merkmale des Anspruchs 1 gelöst.

Die mit der Erfindung erzielten Vorteile bestehen insbesondere darin, dass durch die vorgeschlagenen Massnahmen eine Selbstjustierung des Stators bezüglich der Antriebswelle bzw. der Anschlussnabe beim Anbringen an der Anbaufläche einer Antriebseinheit erfolgt, so dass die Montage einer derartigen Winkelmesseinrichtung vom Anwender selbst auf einfache Weise ohne aufwendige Justiervorrichtungen, ohne Zeitaufwand für Justierungen und ohne geschultes Personal vorgenommen werden kann.

Vorteilhafte Weiterbildungen der Erfindung entnimmt man den Unteransprüchen.

Ein Ausführungsbeispiel der Erfindung wird anhand der Zeichnung näher erläutert.

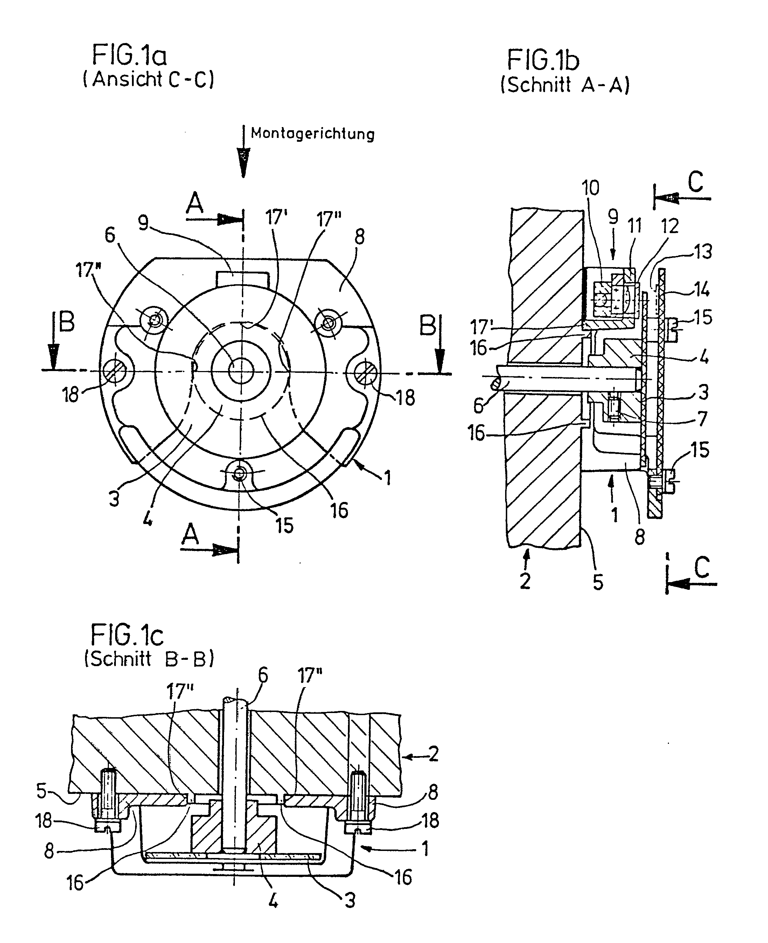

In Fig. 1a-1c ist in einer Ansicht und in zwei Querschnitten eine Winkelmesseinrichtung 1 dargestellt, die an einer Antriebseinheit 2, beispielsweise einem Motor, angebaut ist. Die Winkelmesseinrichtung 1 weist eine Teilscheibe 3 mit einer Anschlussnabe 4 auf, die zur Montage der Winkelmesseinrichtung 1 an einer Anbaufläche 5 der Antriebseinheit 2 auf eine Antriebswelle 6 der Antriebseinheit 2 zur Lagerung aufgeschoben und mittels einer Klemmschraube 7 befestigt wird. Die Winkelmesseinrichtung 1 besitzt ferner ein Gehäuse in Form eines Stators 8, in dessen Inneren eine Abtasteinheit 9 mit einer Lampe 10, einem Kondensor 11, einer Abtastplatte 12 und mit Photoelementen 13 angeordnet ist und die Winkelteilung der Teilscheibe 3 in bekannter Weise abtastet. Die Photoelemente 13 sowie eine nicht dargestellte Auswerteeinrichtung für die von den Photoelementen 13 gelieferten elektrischen Abtastsignale sind auf einer Platine 14 angeordnet, die mittels Schrauben 15 am Stator 8 befestigt ist.

Da die Anschlussnabe 4 mit der Teilscheibe 3 nicht im Stator 8, sondern mittels der nicht gezeigten Lagerung für die Antriebswelle 6 in der Antriebseinheit 2 gelagert ist, ist zur exakten Zuordnung des Stators 8 zur Antriebswelle 6 bzw. zur Anschlussnabe 4 bei der nachfolgenden Montage des Stators 8 auf der Anbaufläche 5 der Antriebseinheit 2 erfindungsgemäss auf der Anbaufläche 5 ein zur Antriebswelle 6 konzentrischer Zentrierbund 16 vorgesehen, der mit einer Anschlagfläche 17' und zwei Passflächen 17'' des Stators 8 in U-förmiger Anordnung zusammenwirkt. Der Stator 8 wird ausserhalb der Teilscheibe 3 auf die Anbaufläche 5 aufgesetzt und anschliessend radial zur Antriebswelle 6 unter Führung der Passflächen 17'' bis zum Anschlag der Anschlagfläche 17' des Stators 8 an den Zentrierbund 16 der Anbaufläche 5 verschoben und in dieser Stellung mittels Schrauben 18 befestigt. Durch die vorgeschlagenen Massnahmen ist kein Justiervorgang mehr erforderlich.

In nicht gezeigter Weise können die Anschlagflächen des Stators auch V-förmig angeordnet sein. Des weiteren können Andruckmittel zum Andrücken der Anschlagflächen des Stators an den Zentrierbund der Anbaufläche vorgesehen sein, zum Beispiel Federn, die den Zentrierbund umklammern. Anstelle der Befestigungsschrauben 18 mit ebenen Auflageflächen können auch Senkschrauben vorgesehen sein, deren Senkungen im Stator bezüglich der betreffenden Gewindebohrungen in der Anbaufläche etwa versetzt angeordnet sind, so dass die Köpfe der Senkschrauben einseitig an den Wänden der Senkungen anliegen und eine Querkraft erzeugen, die eine sichere Anlage der Anschlagflächen des Stators an den Zentrierbund der Anbaufläche gewährleistet.

## Patentansprüche

1. Winkelmesseinrichtung mit einer auf einer Anschlussnabe (4) angeordneten Teilscheibe (3) und mit einer an einem Stator (8) angeordneten Abtasteinheit (9) zur Abtastung der Winkelteilung der Teilscheibe (3), bei der die Anschlussnabe (4) an einer Antriebswelle (6) einer externen Antriebseinheit (2), beispielsweise eines Motors, angeschlossen ist und der Stator (8) an einer Anbaufläche (5) der Antriebseinheit (2) befestigt ist, dadurch gekennzeichnet, dass an der Anbaufläche (5) ein zur Antriebswelle (6) konzentrischer Zentrierbund (16) vorgesehen ist, der mit Anschlagflächen (17') oder mit wenigstens einer Anschlagfläche (17') und Passflächen (17") des Stators (8) zur Zuordnung des Stators (8) zur Antriebswelle (6) bzw. zur Anschlussnabe (4) bei der Montage zusammenwirkt.

2. Winkelmesseinrichtung nach Anspruch 1, dadurch gekennzeichnet, dass die Anschlagfläche (17') und die Passflächen (17") des Stators (8) U-förmig angeordnet sind.

3. Winkelmesseinrichtung nach Anspruch 1, dadurch gekennzeichnet, dass die Anschlagflächen (17') V-förmig angeordnet sind.

4. Winkelmesseinrichtung nach Anspruch 1, dadurch gekennzeichnet, dass Andruckmittel zum Andrücken der Anschlagflächen (17') des Stators (8) an den Zentrierbund (16) der Anbaufläche (5) der Antriebseinheit (2) vorgesehen sind.

5. Winkelmesseinrichtung nach Anspruch 4, dadurch gekennzeichnet, dass die Andruckmittel aus Federn bestehen, die den Zentrierbund (16) umklammern.

6. Winkelmesseinrichtung nach Anspruch 4, dadurch gekennzeichnet, dass die Andruckmittel durch Senkschrauben (18) zur Befestigung des Stators (8) an der Anbaufläche (5) der Antriebseinheit (2) bezüglich der betreffenden Gewindebohrungen in der Anbaufläche versetzt sind.

## Claims

1. Angle-measuring device with an index dial (3) arranged on a connecting hub (4) and with a sensing unit (9) arranged on a stator (8) and intended for sensing the angular division of the index dial (3), the connecting hub (4) being connected to a drive shaft (6) of an external drive unit (2), for example a motor, and the stator (8) being fastened to a mounting surface (5) of the drive unit (2), characterised in that on the mounting surface (5) there is a centering flange (16) which is concentric relative to the drive shaft (6) and which interacts with stop surfaces (17') or with at least one stop surface (17') and locating surfaces (17") of the stator (8) to arrange the stator (8) relative to the drive shaft (6) or to the connecting hub (4) during assembly.

2. Angle-measuring device according to Claim 1, characterised in that the stop surface (17') and the locating surfaces (17") of the stator (8) are arranged in the form of a U.

3. Angle-measuring device according to Claim 1, characterised in that the stop surfaces (17') are arranged in the form of a V.

4. Angle-measuring device according to Claim 1, characterised in that means of applying pressure are provided for pressing the stop surfaces (17') of the stator (8) against the centering flange (16) of the mounting surface (5) of the drive unit (2).

5. Angle-measuring device according to Claim 4, characterised in that the means of applying pressure consist of springs which engage round the centering flange (16).

6. Angle-measuring device according to Claim 4, characterised in that the means of applying pressure are formed by countersunk screws (18) which are intended for fastening the stator (8) to the mounting surface (5) of the drive unit (2) and of which the counter sinkings in the stator (8) are offset relative to the respective threaded bores in the mounting surface.

## Revendications

1. Dispositif de mesure d'angle, avec un disque divisé (3) placé sur un moyeu de jonction (4) et, sur un stator (8), une unité d'exploration (9) pour l'exploration de la graduation d'angle du disque divisé (3), dans lequel le moyeu de jonction (4) est relié à un arbre d'entraînement (6) d'une unité d'entraînement extérieure (2), par exemple un moteur, et le stator (8) est fixé sur une surface d'appui (5) de l'unité d'entraînement, dispositif caractérisé par le fait qu'il comporte, sur la surface d'appui (5), une nervure de centrage (16) concentrique à l'arbre d'entraînement qui, pour ajuster le stator (8) par rapport à l'arbre d'entraînement (6), ou au moyeu de jonction (4), lors du montage, coopère avec des surfaces de butée, ou au moins une surface de butée (17'), et des surfaces de contact (17") du stator (8).

2. Dispositif de mesure d'angle selon la revendication 1, caractérisé par le fait que la surface de butée (17') et les surfaces de contact (17") du stator (8) sont disposées en forme de U.

3. Dispositif de mesure d'angle selon la revendication 1, caractérisé par le fait que les surfaces de butée (17') sont disposées en forme de V.

4. Dispositif de mesure d'angle selon la revendication 1, caractérisé par le fait qu'il comporte des moyens pour serrer les surfaces de butée (17') du stator (8) contre la nervure de centrage (16) de la surface d'appui (5) de l'unité d'entraînement (2).

5. Dispositif de mesure d'angle selon la revendication 4, caractérisé par le fait que les moyens de serrage se composent de ressorts qui enserrent la nervure de centrage (16).

6. Dispositif de mesure d'angle selon la revendication 4, caractérisé par le fait que les moyens de serrage sont formés de vis à tête fraisée (18) pour la fixation du stator (8) sur la surface d'appui (5) de l'unité d'entraînement (2), vis dont les évidements dans le stator (8) sont décalés par rapport aux perçages filetés correspondants de la surface d'appui.

0 100 828

## FIG.1a
### (Ansicht C-C)

Montagerichtung

## FIG.1b
### (Schnitt A-A)

## FIG.1c
### (Schnitt B-B)

5